# EUROPEAN PATENT SPECIFICATION

(11) **EP 3 713 736 B1**
(45) Date of publication and mention of the grant of the patent: **21.02.2024**
(21) Application number: 18881409.9
(22) Date of filing: 05.11.2018
(51) Int. Cl.: B29C 51/36, B29C 51/46, B29C 51/10, B29C 69/02, B29D 99/00

(54) **VACUUM FORMING MOLD ASSEMBLY AND RELATED METHODS OF USE**
VAKUUMFORMWERKZEUGANORDNUNG UND ZUGEHÖRIGE ANWENDUNGSVERFAHREN
ENSEMBLE MOULE DE FORMAGE SOUS VIDE ET PROCÉDÉS D'UTILISATION ASSOCIÉS

(30) Priority: 21.11.2017 US 201715818899
(43) Date of publication of application: 30.09.2020
(73) Proprietor: General Electric Renovables España, S.L., 08005 Barcelona (ES)
(72) Inventor: TOBIN, James Robert, Greenville, SC 29615 (US)
(74) Representative: COPA Copenhagen Patents
(86) International application number: PCT/US2018/059136
(87) International publication number: WO 2019/103825

(56) References cited:
- EP-A2- 0 435 446
- EP-B1- 0 435 446
- CN-A- 104 955 278
- CN-U- 204 488 065
- CN-U- 204 488 065
- JP-A- 2012 158 151
- JP-A- 2012 158 151
- US-A1- 2010 252 963
- US-A1- 2011 266 721
- US-A1- 2015 266 249

## Description

### FIELD

The present disclosure generally relates to vacuum forming molds. More particularly, the present disclosure relates vacuum forming mold assemblies and related methods of use, such as for use in forming wind turbine components.

### BACKGROUND

Publication US2015266249A1 discloses a system for vacuum forming a rotor blade segment of a wind turbine, the system comprising: a plurality of mold segments to define a mold cavity configured for forming the rotor blade segment.
Publication JP2012158151A discloses a system for vacuum forming a component, the system comprising: a plurality of mold segments to define a mold cavity configured for forming the component, the plurality of the mold segments defining a plurality of vacuum chambers of the system, at least one of the vacuum chambers being fluidly isolated from the other vacuum chambers, one or more of the plurality of mold segments further defining a plurality of vacuum passages fluidly coupling the mold cavity and the corresponding vacuum chamber.
Publications EP0435446B1, CN204488065U and US2010252963A1 disclose systems for vacuum forming a component, the systems comprising: a plurality of mold segments removably coupled together to define a mold cavity configured for forming the component, the plurality of the mold segments defining a plurality of vacuum chambers of the system, at least one of the vacuum chambers being fluidly isolated from the other vacuum chambers, one or more of the plurality of mold segments further defining a plurality of vacuum passages fluidly coupling the mold cavity and the corresponding vacuum chamber.

Wind power is considered one of the cleanest, most environmentally friendly energy sources presently available, and wind turbines have gained increased attention in this regard. A modem wind turbine typically includes a tower, a nacelle mounted on the tower, a generator positioned in the nacelle, and one or more rotor blades. The one or more rotor blades convert kinetic energy of wind into mechanical energy using known airfoil principles. A drivetrain transmits the mechanical energy from the rotor blades to the generator. The generator then converts the mechanical energy to electrical energy that may be supplied to a utility grid.

Each rotor blade generally includes various segments, such as a pressure side segment and a suction side segment bonded together along leading and trailing edges of the rotor blade. The segments are formed using a suitable molding process, such as vacuum forming. For example, in a typical vacuum forming operation, a heated, pliable sheet of thermoplastic material is placed into a mold cavity of a mold. A vacuum is then created within a mold cavity such that thermoplastic material conforms to the shape of the mold cavity. The thermoplastic material, which now has the shape of one of segments, is then cooled and removed from the mold cavity.

In certain instances, the mold may be modular. That is, the mold may be formed from a plurality of mold segments removably coupled together. Such modular construction reduces mold cost and facilitates easier and more cost effective modifications to the mold. Nevertheless, the joints between each mold segment may create vacuum leaks.

Accordingly, an improved system for vacuum forming components, such as wind turbine components, and associated methods of using the system to form such components would be welcomed in the art. The invention is defined by the features of the independent claims.

### BRIEF DESCRIPTION

Aspects and advantages of the technology will be set forth in part in the following description, or may be obvious from the description, or may be learned through practice of the technology.

In one aspect, the present disclosure is directed to a system for vacuum forming a component in accordance with claim 1. The system includes a base and a plurality of mold segments positioned on the base. The plurality of mold segments are removably coupled together to define a mold cavity configured for forming the component. The base and one or more of the plurality of the mold segments collectively define a corresponding vacuum chamber of a plurality of vacuum chambers of the system. One or more of the vacuum chambers are fluidly isolated from the other vacuum chambers. One or more of the plurality of the mold segment further defines a plurality of vacuum passages fluidly coupling the mold cavity and the corresponding vacuum chamber.

In another aspect, the present disclosure is directed to a method for forming a rotor blade segment for a wind turbine. The method includes removably coupling a plurality of mold segments together to form a mold of the rotor blade panel. One or more of the plurality of the mold segments define a portion of a mold cavity of the mold. The mold cavity being configured to form an outer skin of the rotor blade panel. One or more of the plurality of the mold segments partially define a corresponding vacuum chamber of a plurality of vacuum chambers of the mold. Each vacuum chamber is fluidly isolated from each other vacuum chamber. One or more of the plurality of the Mold segments further define a plurality of vacuum passages fluidly coupling the mold cavity and the corresponding vacuum chamber. The method also includes heating one or more of the plurality of mold segments to a forming temperature. The method further includes positioning a thermoplastic sheet on the mold such that at least a portion of the thermoplastic sheet is positioned within or over the mold cavity. Additionally, the method includes selectively applying a vacuum to one or more of the plurality of the vacuum chambers. The thermoplastic sheet conforms to the portion of the mold cavity defined by each mold segment when the vacuum is applied to the 3orrespondding vacuum chamber such that the thermoplastic sheet forms the outer skin of the rotor blade segment after the vacuum has been applied to all of the vacuum chambers.

In a further aspect, the present disclosure is directed to a method for vacuum forming a component using a vacuum forming mold assembly. The vacuum forming mold assembly includes a plurality of mold segments removably coupled together to form a mold of the rotor blade panel. One or more of the plurality of mold segments define a portion of a mold cavity of the mold. The mold cavity is configured to form an outer skin of the rotor blade panel. One or more of the plurality of mold segments partially define a corresponding vacuum chamber of a plurality of vacuum chambers of the mold. One or more of the plurality of vacuum chambers are fluidly isolated from each other vacuum chamber. One or more of the plurality of mold segments further defining a plurality of vacuum passages fluidly coupling the mold cavity and the corresponding vacuum chamber. The method includes heating each of the plurality of mold segments to a forming temperature. The method also includes positioning a thermoplastic sheet on the mold such that at least a portion of the thermoplastic sheet is positioned within or over the mold cavity. The method further includes selectively applying a vacuum to one or more of the plurality of vacuum chambers such that, when the thermoplastic sheet conforms to the mold cavity, the thermoplastic sheet is substantially free of wrinkles.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 is a perspective view of one embodiment of a wind turbine in accordance with aspects of the present disclosure;
FIG. 2 is a perspective view of one embodiment of a modular rotor blade of a wind turbine in accordance with aspects of the present disclosure;
FIG. 3 is an exploded view of the modular rotor blade shown in FIG. 2 in accordance with aspects of the present disclosure;
FIG. 4 is a cross-sectional view of one embodiment of a leading edge segment of a modular rotor blade in accordance with aspects of the present disclosure;
FIG. 5 is a cross-sectional view of one embodiment of a trailing edge segment of a modular rotor blade in accordance with aspects of the present disclosure;
FIG. 6 is a cross-sectional view of the modular rotor blade of FIG. 2 in accordance with aspects of the present disclosure;
FIG. 7 is a cross-sectional view of the modular rotor blade of FIG. 2 in accordance with aspects of the present disclosure;
FIG. 8 is a top view of one embodiment of a system for vacuum forming a component in accordance with aspects of the present disclosure, not forming a part of the present invention;
FIG. 9 is a cross-sectional view of the system shown in FIG. 8 taken generally about Line 9-9 in accordance with aspects of the present disclosure;
FIG. 10 is a cross-sectional view of the system shown in FIG. 8 taken generally about Line 10-10 in accordance with aspects of the present disclosure;
FIG. 11 is a cross-sectional view of one embodiment of a mold segment in accordance with aspects of the present disclosure;
FIG. 12 is a schematic view of one embodiment of a system for vacuum forming a component in accordance with aspects of the present disclosure;
FIG. 13 is a top view of one embodiment of a system for vacuum forming a component in accordance with aspects of the present disclosure, particularly illustrating a thermoplastic sheet placed on a mold of the system;
FIG. 14 is a cross-section view of one embodiment of a system for vacuum forming a component in accordance with aspects of the present disclosure, particularly illustrating the thermoplastic sheet conforming to a mold cavity of the system;
FIG. 15 is a perspective view of one embodiment of a system for vacuum forming a component in accordance with aspects of the present disclosure, particularly illustrating a mold of the system with a three-dimensional printer positioned above the mold;
FIG. 16 is a perspective view of one embodiment of a system for vacuum forming a component in accordance with aspects of the present disclosure, particularly illustrating a three-dimensional printer printing a first number of layers of a structural component of a rotor blade panel;
FIG. 17 is a side view of one embodiment of a system for vacuum forming a component in accordance with aspects of the present disclosure, particularly illustrating a three-dimensional printer printing a second number of layers of a structural component of a rotor blade panel;
FIG. 18 is a side view of one embodiment of a system for vacuum forming a component in accordance with aspects of the present disclosure, particularly illustrating a three-dimensional printer printing a trailing edge extension of a rotor blade panel;
FIG. 19 is a flow chart illustrating one embodiment of a method for vacuum forming a component in accordance with aspects of the present disclosure; and
FIG. 20 is a flow chart illustrating another embodiment of a method for vacuum forming a component in accordance with aspects of the present disclosure.

Repeat use of reference characters in the present specification and drawings is intended to represent the same or analogous features or elements of the present technology.

### DETAILED DESCRIPTION

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components.

Each example is provided by way of explanation of the technology, not limitation of the technology. In fact, it will be apparent to those skilled in the art that modifications and variations can be made in the present technology. Thus, it is intended that the present technology covers such modifications and variations as come within the scope of the appended claims.

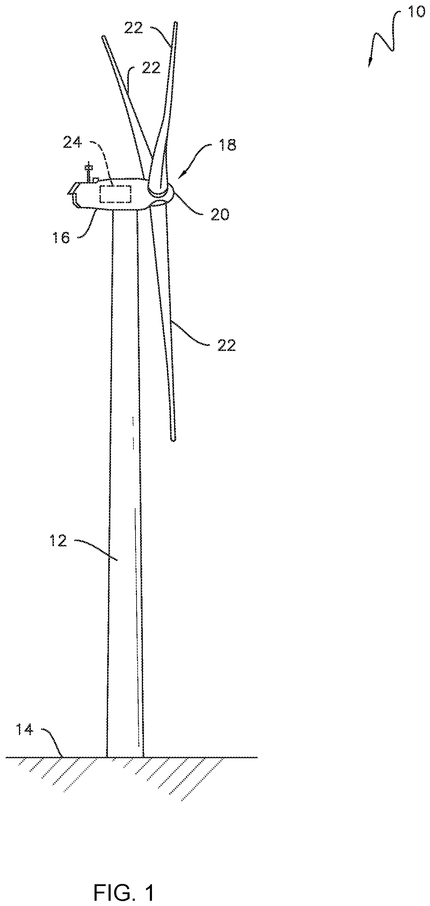

Referring now to the drawings, FIG. 1 illustrates a perspective view of one embodiment of an exemplary wind turbine 10 in accordance with the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the embodiment shown in FIG. 1, the rotor 18 includes three rotor blades 22. In alternative embodiments, however, the rotor 18 may include more or less than three rotor blades 22. Each rotor blade 22 may be spaced about the hub 20 to facilitate rotating the rotor 18 to convert kinetic energy from the wind into usable mechanical energy, and subsequently, electrical energy. For instance, the hub 20 may be rotatably coupled to an electric generator 24 positioned within the nacelle 16.

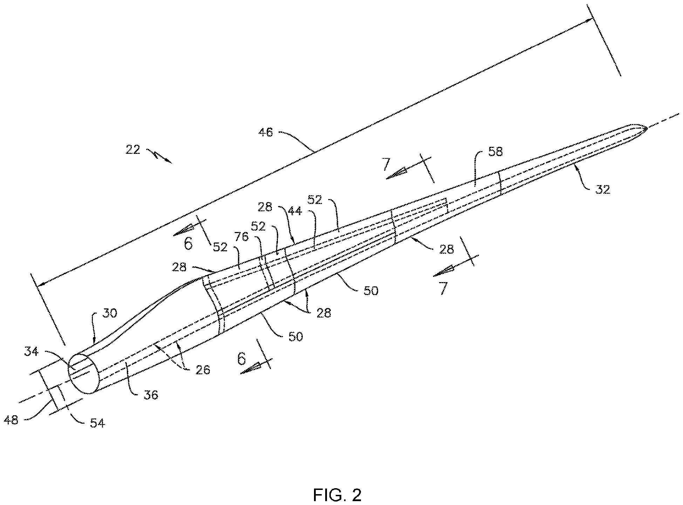

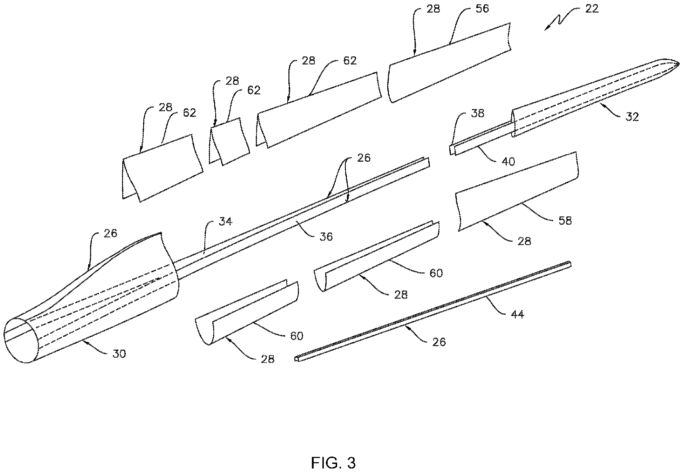

Referring now to FIGS. 2 and 3, various views of a rotor blade 16 according to the present disclosure are illustrated. As shown, the illustrated rotor blade 22 has a segmented or modular configuration. It should also be understood that the rotor blade 22 may include any other suitable configuration now known or later developed in the art. As shown, the modular rotor blade 22 includes a main blade structure 26 constructed, at least in part, from a thermoset and/or a thermoplastic material and at least one blade segment 28 configured with the main blade structure 26. More specifically, as shown, the rotor blade 22 includes a plurality of blade segments 28. The blade segment(s) 28 may also be constructed, at least in part, from a thermoset and/or a thermoplastic material.

The thermoplastic rotor blade components and/or materials as described herein generally encompass a plastic material or polymer that is reversible in nature. For example, thermoplastic materials typically become pliable or moldable when heated to a certain temperature and returns to a more rigid state upon cooling. Further, thermoplastic materials may include amorphous thermoplastic materials and/or semi-crystalline thermoplastic materials. For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

Further, the thermoset components and/or materials as described herein generally encompass a plastic material or polymer that is non-reversible in nature. For example, thermoset materials, once cured, cannot be easily remolded or returned to a liquid state. As such, after initial forming, thermoset materials are generally resistant to heat, corrosion, and/or creep. Example thermoset materials may generally include, but are not limited to, some polyesters, some polyurethanes, esters, epoxies, or any other suitable thermoset material.

In addition, as mentioned, the thermoplastic and/or the thermoset material as described herein may optionally be reinforced with a fiber material, including but not limited to glass fibers, carbon fibers, polymer fibers, wood fibers, bamboo fibers, ceramic fibers, nanofibers, metal fibers, or similar or combinations thereof. In addition, the direction of the fibers may include multi-axial, unidirectional, biaxial, triaxial, or any other another suitable direction and/or combinations thereof. Further, the fiber content may vary depending on the stiffness required in the corresponding blade component, the region or location of the blade component in the rotor blade 22, and/or the desired weldability of the component.

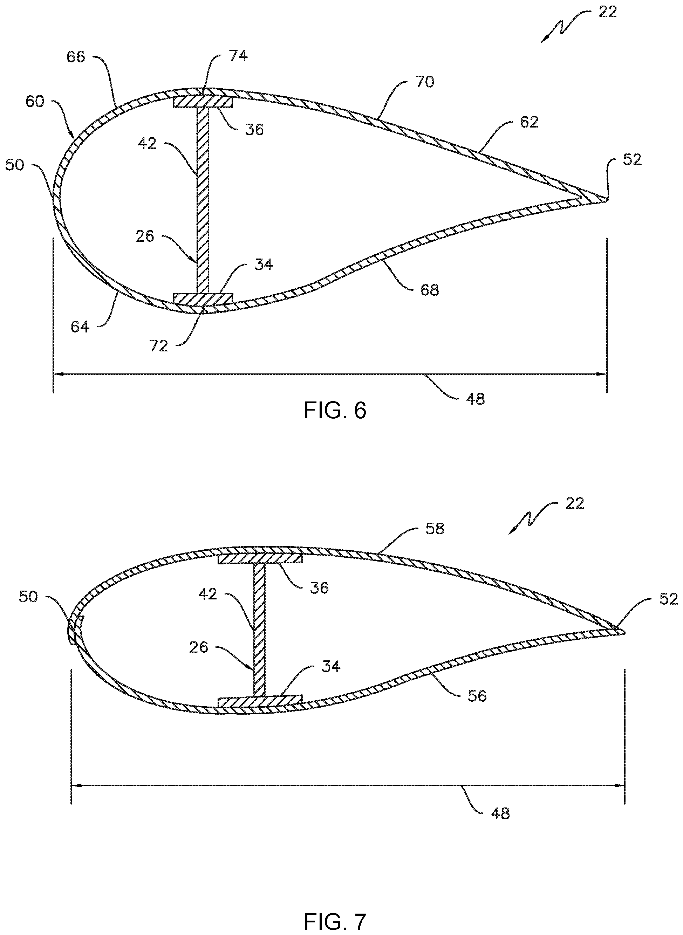

More specifically, as shown, the main blade structure 26 may include any one of or a combination of the following: a pre-formed blade root section 30, a pre-formed blade tip section 32, one or more one or more continuous spar caps 34, 36, 38, 40, one or more shear webs 42 (FIGS. 6-7), an additional structural component 44 secured to the blade root section 30, and/or any other suitable structural component of the rotor blade 22. Further, the blade root section 30 is configured to be mounted or otherwise secured to the hub 20 (FIG. 1). In addition, as shown in FIG. 2, the rotor blade 22 defines a span 46 that is equal to the total length between the blade root section 30 and the blade tip section 32. As shown in FIGS. 2 and 6, the rotor blade 22 also defines a chord 48 that is equal to the total length between a leading edge 50 of the rotor blade 22 and a trailing edge 52 of the rotor blade 22. As is generally understood, the chord 48 may generally vary in length with respect to the span 46 as the rotor blade 22 extends from the blade root section 30 to the blade tip section 32.

Referring particularly to FIGS. 2-4, any number of blade segments 28 or segments having any suitable size and/or shape may be generally arranged between the blade root section 30 and the blade tip section 32 along a longitudinal axis 54 in a generally span-wise direction. Thus, the blade segments 28 generally serve as the outer casing/covering of the rotor blade 22 and may define a substantially aerodynamic profile, such as by defining a symmetrical or cambered airfoil-shaped cross-section. In additional embodiments, it should be understood that the blade segment portion of the blade 22 may include any combination of the segments described herein and are not limited to the embodiment as depicted. In addition, the blade segments 28 may be constructed of any suitable materials, including but not limited to a thermoset material or a thermoplastic material optionally reinforced with one or more fiber materials. More specifically, in certain embodiments, the blade segments 28 may include any one of or combination of the following: pressure and/or suction side segments 56, 58, (FIGS. 2 and 3), leading and/or trailing edge segments 60, 62 (FIGS. 2-6), a non-jointed segment, a single-jointed segment, a multi-jointed blade segment, a J-shaped blade segment, or similar.

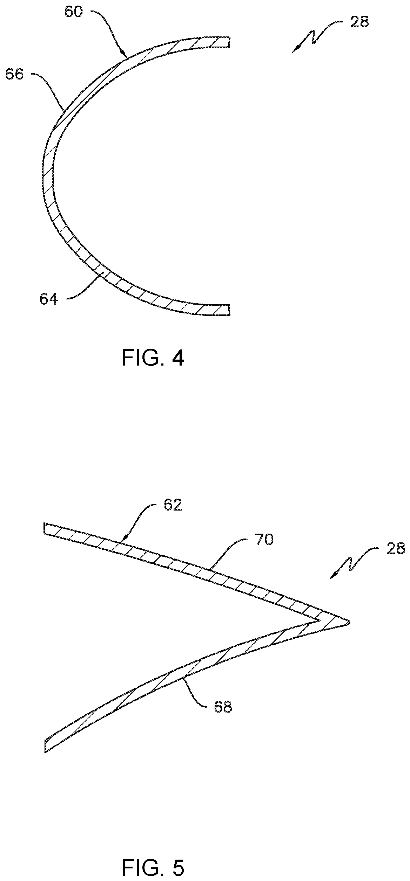

More specifically, as shown in FIG. 4, the leading edge segments 60 may have a forward pressure side surface 64 and a forward suction side surface 66. Similarly, as shown in FIG. 5, each of the trailing edge segments 62 may have an aft pressure side surface 68 and an aft suction side surface 70. Thus, the forward pressure side surface 64 of the leading edge segment 60 and the aft pressure side surface 68 of the trailing edge segment 62 generally define a pressure side surface of the rotor blade 22. Similarly, the forward suction side surface 66 of the leading edge segment 60 and the aft suction side surface 70 of the trailing edge segment 62 generally define a suction side surface of the rotor blade 22. In addition, as particularly shown in FIG. 6, the leading edge segment(s) 60 and the trailing edge segment(s) 62 may be joined at a pressure side seam 72 and a suction side seam 74. For example, the blade segments 60, 62 may be configured to overlap at the pressure side seam 72 and/or the suction side seam 74. Further, as shown in FIG. 2, adjacent blade segments 28 may be configured to overlap at a seam 76. Thus, where the blade segments 28 are constructed at least partially of a thermoplastic material, adjacent blade segments 28 can be welded together along the seams 72, 74, 76, which will be discussed in more detail herein. Alternatively, in certain embodiments, the various segments of the rotor blade 22 may be secured together via an adhesive (or mechanical fasteners) configured between the overlapping leading and trailing edge segments 60, 62 and/or the overlapping adjacent leading or trailing edge segments 60, 62.

In specific embodiments, as shown in FIGS. 2-3 and 6-7, the blade root section 30 may include one or more longitudinally extending spar caps 34, 36 infused therewith. For example, the blade root section 30 may be configured according to U.S. Application Number 14/753,155 filed June 29, 2015 entitled "Blade Root Section for a Modular Rotor Blade and Method of Manufacturing Same".

Similarly, the blade tip section 32 may include one or more longitudinally extending spar caps 38, 40 infused therewith. More specifically, as shown, the spar caps 34, 36, 38, 40 may be configured to be engaged against opposing inner surfaces of the blade segments 28 of the rotor blade 22. Further, the blade root spar caps 34, 36 may be configured to align with the blade tip spar caps 38, 40. Thus, the spar caps 34, 36, 38, 40 may generally be designed to control the bending stresses and/or other loads acting on the rotor blade 22 in a generally span-wise direction (a direction parallel to the span 46 of the rotor blade 22) during operation of a wind turbine 10. In addition, the spar caps 34, 36, 38, 40 may be designed to withstand the span-wise compression occurring during operation of the wind turbine 10. Further, the spar cap(s) 34, 36, 38, 40 may be configured to extend from the blade root section 30 to the blade tip section 32 or a portion thereof. Thus, in certain embodiments, the blade root section 30 and the blade tip section 32 may be joined together via their respective spar caps 34, 36, 38, 40.

In addition, the spar caps 34, 36, 38, 40 may be constructed of any suitable materials, e.g. a thermoplastic or thermoset material or combinations thereof. Further, the spar caps 34, 36, 38, 40 may be pultruded from thermoplastic or thermoset resins. As used herein, the terms "pultruded," "pultrusions," or similar generally encompass reinforced materials (e.g. fibers or woven or braided strands) that are impregnated with a resin and pulled through a stationary die such that the resin cures or undergoes polymerization. As such, the process of manufacturing pultruded members is typically characterized by a continuous process of composite materials that produces composite parts having a constant cross-section. Thus, the pre-cured composite materials may include pultrusions constructed of reinforced thermoset or thermoplastic materials. Further, the spar caps 34, 36, 38, 40 may be formed of the same pre-cured composites or different pre-cured composites. In addition, the pultruded components may be produced from rovings, which generally encompass long and narrow bundles of fibers that are not combined until joined by a cured resin.

Referring to FIGS. 6-7, one or more shear webs 42 may be configured between the one or more spar caps 34, 36, 38, 40. More particularly, the shear web(s) 42 may be configured to increase the rigidity in the blade root section 30 and/or the blade tip section 32. Further, the shear web(s) 42 may be configured to close out the blade root section 30.

In addition, as shown in FIGS. 2 and 3, the additional structural component 44 may be secured to the blade root section 30 and extend in a generally span-wise direction so as to provide further support to the rotor blade 22. For example, the structural component 44 may be configured according to U.S. Application Number 14/753,150 filed June 29, 2015 entitled "Structural Component for a Modular Rotor Blade". More specifically, the structural component 44 may extend any suitable distance between the blade root section 30 and the blade tip section 32. Thus, the structural component 44 is configured to provide additional structural support for the rotor blade 22 as well as an optional mounting structure for the various blade segments 28 as described herein. For example, in certain embodiments, the structural component 44 may be secured to the blade root section 30 and may extend a predetermined span-wise distance such that the leading and/or trailing edge segments 60, 62 can be mounted thereto.

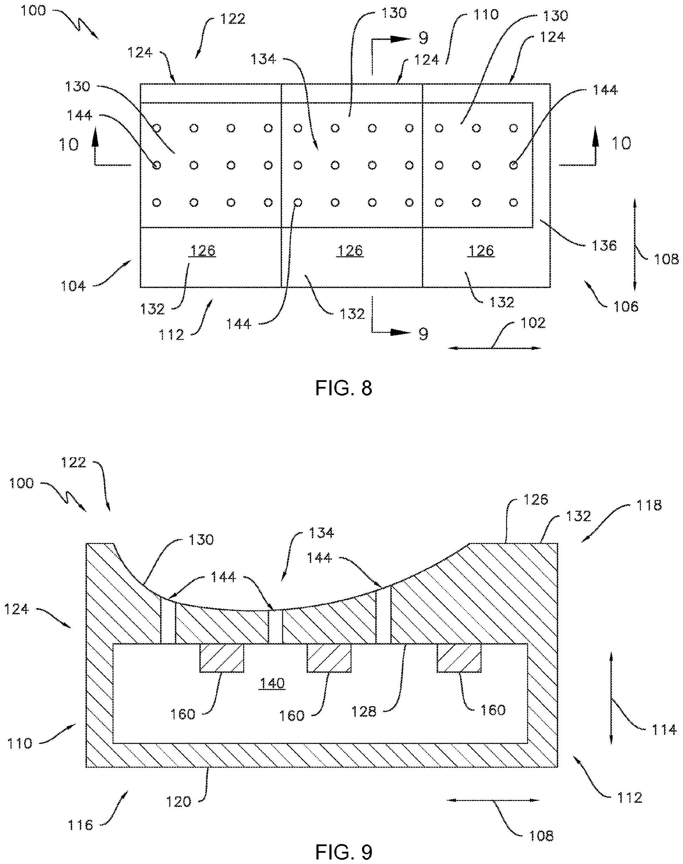

FIGS. 8-11 illustrate one embodiment of a system 100 for vacuum forming various thermoplastic components. In several embodiments, the system 100 is configured to form a thermoplastic component of the wind turbine 10. For example, the system 100 may be configured to one of the blade segments 28 of the rotor blade 22, such as one of the pressure side segments 56, the suction side segments 58, the leading edge segments 60, or the trailing edge segments 62. Nevertheless, in alternative embodiments, the system 100 may be configured to form any thermoplastic component for use in any suitable application, including applications outside of wind turbines.

As illustrated in FIGS. 8-10, the system 100 defines various directions. More specifically, the directions of the system 100 may be defined relative to the particular thermoplastic component of which the system 100 is configured to form. As mentioned above, in some embodiments, the system 100 may be configured to form one of the blade segments 28. In such embodiments, the system 100 defines a span-wise direction (e.g., as indicated by arrow 102 in FIGS. 8-10) extending between a root side 104 of the system 100 and a tip side 106 of the system 100. The system 100 also defines chord-wise direction (e.g., as indicated by arrow 108 in FIGS. 8-10) extending between a leading edge side 110 of the system 100 and a trailing edge side 112 of the system 100. Furthermore, the system 100 defines a vertical direction (e.g., as indicated by arrow 114 in FIGS. 8-10) extending between a bottom side 116 of the system 100 and a top side 118 of the system 100. In alternative embodiments, however, the system 100 may define other directions in addition to or in lieu of the span-wise, chord-wise, and vertical directions 102, 108, 114 depending on the particular configuration of the thermoplastic component.

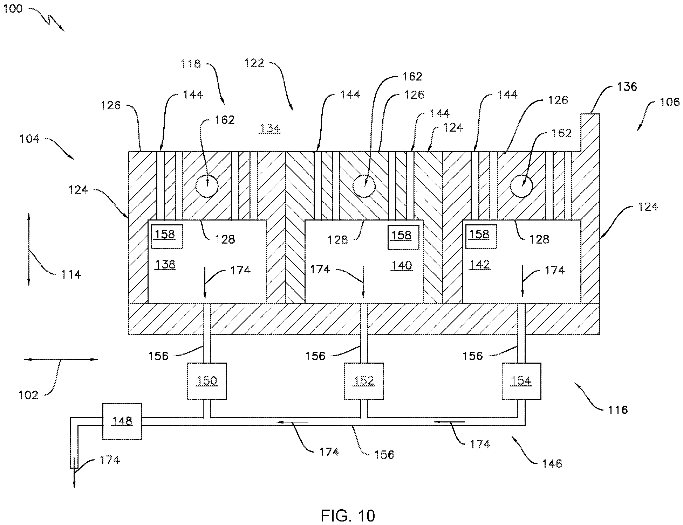

As shown in FIGS. 9 and 10, the system 100 includes a base 120. In general, the base 120 is configured to support a mold 122 of the system 100. In the illustrated embodiment, the base 120 has a plate-like configuration that permits placement of the mold 122 thereon. Nevertheless, the base 120 may have any other suitable configuration.

As indicated above, the system 100 also includes the mold 122. More specifically, as shown in FIGS. 8-10, the mold 122 may have a modular construction. In this respect, the mold 122 may be formed from a plurality mold segments 124. In general, the mold segments 124 are removably coupled together (e.g., via suitable fasteners). As such, the configuration of the mold 122 may be easily changed or modified by decoupling the mold segments 124 and replacing certain mold segments 124 with new mold segments 124. In the embodiment shown in FIGS. 8-10, the mold 122 includes three mold segments 124 stacked in the span-wise direction 102 and removably coupled together. Sealant (e.g., silicone) may be placed between each adjacent pair of mold segments 124 to seal therebetween. Nevertheless, in alternative embodiments, the mold 122 include only two mold segments 124 or more than four mold segments 124. Furthermore, the mold segments 124 stacked together in the chord-wise direction 108 or any other suitable direction. Additionally, in several embodiments, the mold segments 124 may be formed from aluminum and any other suitable material.

Each mold segment 124 includes various surfaces. For example, as shown, each mold segment 124 may include a top surface 126 and a bottom surface 128. In general, the top surface 126 of each mold segment 124 may be positioned at or proximate the top side 118 of the system 100, while the bottom surface 128 of each mold segment 124 may be positioned at or proximate to the bottom side 116 of the system 100. As such, the top surface 126 is spaced apart from the bottom surface 128 along the vertical direction 114. In several embodiments, the top surface 126 of mold segment 128 may include a first portion 130 and a second portion 132. Additionally, each mold segment 124 may include other surfaces as well.

The mold 122 of the system 100 defines a mold cavity 134. More specifically, the mold cavity 134 may generally have a shape corresponding to the thermoplastic component to which the system 100 is configured to form. For example, in embodiments where the system 100 is configured to form one of the blade segments 28, the mold cavity 134 generally has a shape corresponding to the blade segment 28. Furthermore, as mentioned above, the mold 122 may be formed from the plurality of the mold segments 124. As such, the first portion 130 of the top surface 126 of each mold segment 124 defines a portion of the mold cavity 124. In this respect, the first portion 130 of the top surface 126 of each mold segment 124 a shape corresponding to the component to which the system 100 is configured to form (e.g., one of the blade segments 28).

Furthermore, the mold 122 may include one or more alignment features 136. More specifically, as will be described in greater detail below, a thermoplastic sheet may be placed on the mold 122 for forming the thermoplastic component. In this respect, the alignment feature(s) 136 facilitate proper positioning of the thermoplastic sheet on the mold 122. As such, in the embodiment shown in FIGS. 8 and 10, the alignment feature 136 is a vertical wall or ledge against which the thermoplastic sheet may be abutted. Nevertheless, the alignment feature(s) 136 may be bumps, projections, lines, ridges, pins, or any other suitable features for assisting in the alignment of the thermoplastic sheet.

Referring now to FIG. 10, the base 120 and mold 122 collectively define a plurality of vacuum chambers 138, 140, 142. In general, one or more of the vacuum chambers 138, 140, 142 is fluid isolated from the other vacuum chambers 138, 140, 142 such that the pressure within one of the vacuum chambers 138, 140, 142 is independent of the pressure in each of the other vacuum chambers 138, 140, 142. In this respect, and as will be discussed in greater detail below, a vacuum may be applied to one of the vacuum chambers 138, 140, 142 without necessarily requiring that the vacuum be applied to any of the other vacuum chambers 138, 140, 142. Furthermore, in several embodiments, each of the vacuum chambers 138, 140, 142 corresponds to one of the mold segments 124. More specifically, as shown, each of the vacuum chambers 138, 140, 142 is defined by a portion of the base 120 and the bottom surface 128 of one of the mold segments 124. The system 100 includes one vacuum chamber 138, 140, 142 for each of the mold segments 124. For example, in the embodiment shown, the system 100 includes three vacuum chambers 138, 140, 142. Nevertheless, in alternative embodiments, the system 100 may include more or fewer vacuum chambers 138, 140, 142 depending on the number mold segments 124. In one embodiment, seals (not shown) may be positioned between the base 120 and the mold segments 124 to prevent vacuum leaks therebetween. Since the vacuum chambers 138, 140, 142 are fluid isolated from each other and correspond to one of the mold segments 124, the system 100, unlike conventional vacuum forming systems, prevents vacuum leaks from forming between adjacent pairs of the mold segments 124.

Furthermore, as shown in FIGS. 8-10, each mold segment 124 defines a plurality of vacuum passages 144. More specifically, each vacuum passage 144 fluidly couples the mold cavity 134 and the corresponding vacuum chamber 138, 140, 142. In this respect, each vacuum passage 144 extends vertically between from the top surface 126 of the corresponding mold segment 124 to the bottom surface 128 of the corresponding mold segment 124. In several embodiments, the vacuum passages 144 extend through the first portion 130 of the top surface 126 of each mold segment 124, while the second portion 132 of the top surface 126 of each mold segment 124 is devoid of the vacuum passages 144. In such embodiments, the second portion 132 of the top surface 126 of each mold segment 144 is fluidly isolated from the each of the vacuum chambers 138, 140, 142.

As illustrated in FIG. 10, the system 100 further includes a vacuum system 146 configured to selectively apply the vacuum to each of the vacuum chambers 138, 140, 142. In general, the vacuum system 146 is configured to apply the vacuum to one or more of the vacuum chambers 138, 140, 142 independently of the other vacuum chamber 138, 140, 142. More specifically, as shown, the vacuum system 146 may include a vacuum pump 148 configured to create or otherwise generate a vacuum within the vacuum system 146. The vacuum system 146 also includes a plurality of valves 150, 152, 154. In general, the each of the valves 150, 152, 154 corresponds to one of the vacuum chambers 138, 140, 142 to selectively fluidly couple the corresponding vacuum chamber 138, 140, 142 to the vacuum pump 148. That is, the valves 150, 152, 154 fluidly couple the corresponding vacuum chamber 138, 140, 142 to the vacuum pump 148 when open to apply the vacuum generated by the vacuum pump 148 to the corresponding vacuum chamber 138, 140, 142. Conversely, the valves 150, 152, 154 fluidly isolate the corresponding vacuum chamber 138, 140, 142 to the vacuum pump 148 when closed to prevent application of the vacuum generated by the vacuum pump 148 to the corresponding vacuum chamber 138, 140, 142. In the embodiment shown in FIG. 10, the valve 150 is associated with the vacuum chamber 138, the valve 152 is associated with the vacuum chamber 140, and the valve 154 is associated with the vacuum chamber 142. Nevertheless, in alternative embodiments, the vacuum system 148 may include more or fewer valves 150, 152, 154 depending on the number of vacuum chambers 138, 140, 142. Additionally, the vacuum system 146 includes various conduits for conduits fluidly coupling each of the components of the vacuum system 148 to each other and the vacuum chambers 138, 140, 142. In further embodiments, the vacuum system 146 may include one vacuum source 148 for each vacuum chamber 138, 140, 142 such that valves are not needed to control the pressure within each vacuum chamber 138, 140, 142.

In one embodiment, as shown in FIG. 10, the system 100 may include a plurality of pressure sensors 158. In general, each pressure sensor 158 is in operative association with one of the vacuum chambers 138, 140, 142. As such, each pressure sensor 158 is configured to detect a parameter indicative of a pressure within the associated vacuum chambers 138, 140, 142. In the embodiment shown in FIG. 10, the system 100 includes three pressure sensors 158. Nevertheless, in alternative embodiments, the system 100 may include more or fewer pressure sensors 158 including zero pressure sensors 158. The pressure sensors 158 may be mechanical gauges or electronic sensors.

Referring back to FIG. 9, the system 100 may include one or more heating elements 160 configured to heat the mold 122. As shown, in several embodiments, the heating elements 160 may be coupled to or otherwise in contact with the bottom surfaces 128 of the mold segments 124 to heat each mold segment 124 of the mold 122. For example, each heating element 160 may be operatively coupled to one or more of the mold segments 124. Each heating element 160 may be a resistive heating element or any other suitable type of heating element 160. Although FIG. 9 illustrates three heating elements 160, the system 100 may include more or fewer heating elements 160. Furthermore, the heating elements 160 may be operated as a single unit (e.g., turned on and off simultaneously) or operated independently of each other.

As illustrated in FIG. 10, each mold segment 124 may define one or more fluid passages 162 extending therethrough. In one embodiment, a fluid may flow through the fluid passages 162 in the mold segments 124 to cool the mold 122, such as below the glass transition temperature of the thermoplastic sheet. In one embodiment, the fluid passages 162 may extend along the chord-wise direction 108. As such, the fluid passages 162 may be spaced apart from each other along the span-wise direction 102. Nevertheless, in alternative embodiments, the fluid passages 162 may extend through the mold segments 124 in any suitable manner. Further embodiments of the mold segments 124 may define no fluid passages 162 at all. Furthermore, fluid may be supplied to all of the fluid passages 162 simultaneously or selectively supplied to the fluid passages 162 independently of each other.

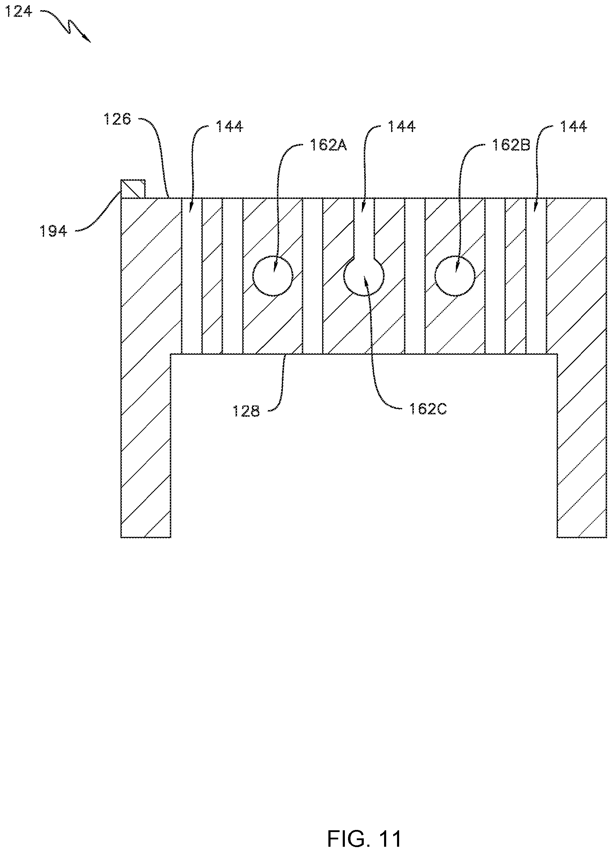

FIG. 11 illustrates another embodiment of one of the mold segments 124. As shown, the mold segment 124 defines three fluid passages 162A, 162B, 162C. For example, the fluid passage 162A may be coupled to a heating fluid source (not shown) such that a heating fluid may flow therethrough to heat the mold segment 124 for vacuum forming a thermoplastic sheet. The fluid passage 162B may be fluidly coupled to a cooling fluid source (not shown) such that a cooling fluid may flow therethrough to cool the mold segment 124. The fluid passage 162C may be fluid coupled to the vacuum pump 148 (FIG. 10) such that a vacuum is present therein. As such, one or more vacuum passages 144 may fluidly couple the mold cavity 134 and the fluid passage 146. The fluid passages 162A-C may extend along the chord-wise direction 108. As such, the fluid passages 162A-C may be spaced apart from each other along the span-wise direction 102. Nevertheless, in alternative embodiments, the fluid passages 162A-C may extend through the mold segments 124 in any suitable manner. In further embodiments, the mold plates 128 may define only some of the fluid passages 162A-C. For example, one mold segment 124 may define the fluid passage 162A, an adjacent mold segment 124 may define the fluid passage 162B, and a further adjacent mold plate 124 may define the fluid 162C. This arrangement may be repeated throughout the mold assembly 100.

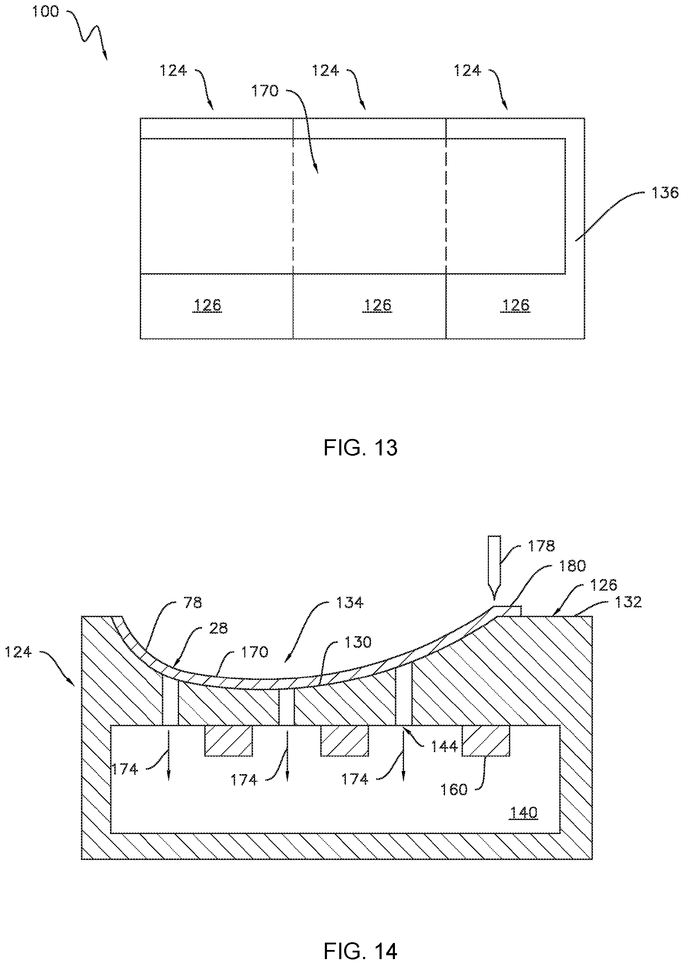

Additionally, as shown in FIG. 11, the mold assembly 100 may include a gasket 264 positioned around its perimeter. In general, the gasket 194 is configured to provide a seal between the mold 122 and a thermoplastic sheet 170 (FIG. 14) placed on the mold 122 to be formed into a component. In certain embodiments, the gasket 194 is used when forming a component from a reinforced thermoplastic sheet (e.g., fiberglass). For example, in one embodiment, the gasket 194 may be formed from silicone. Although, the gasket 194 may be formed from any other suitable material.

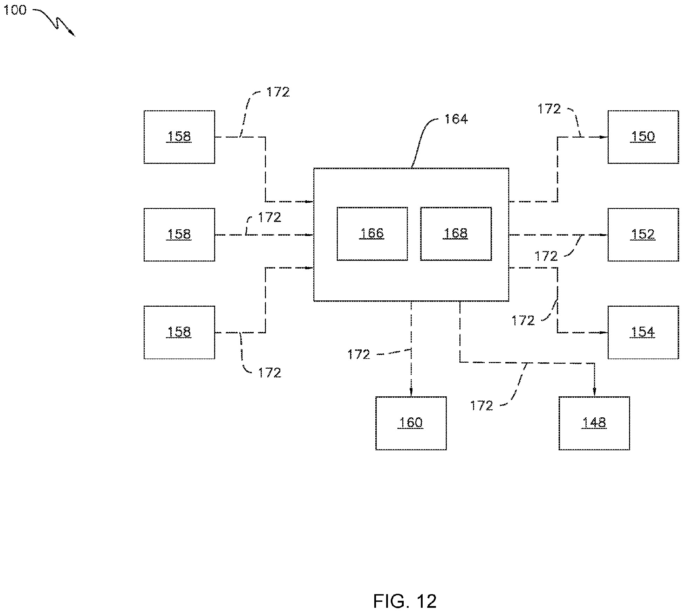

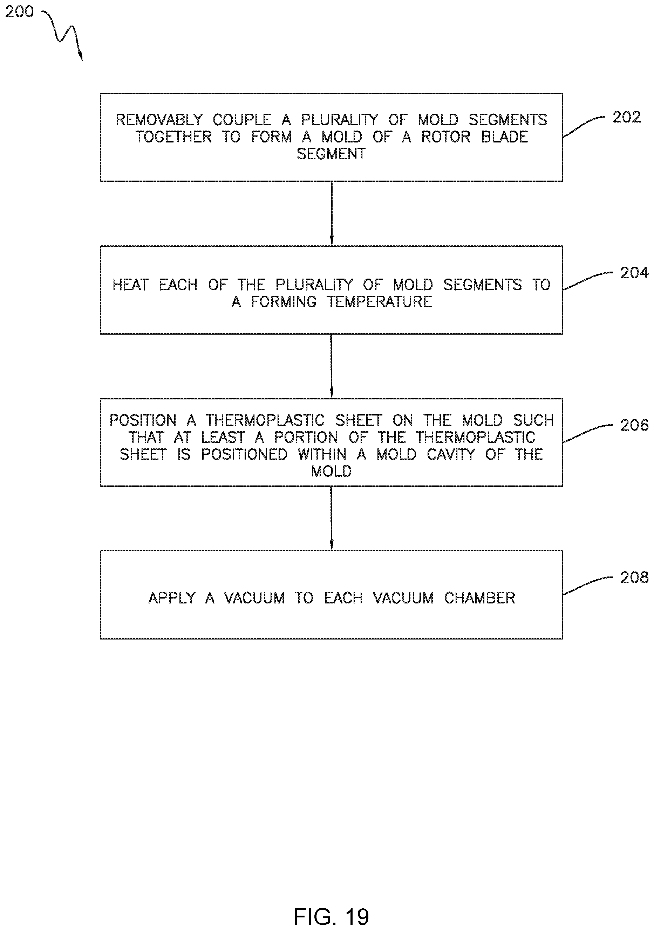

Referring now to FIG. 12, the system 100 may further include a controller 164 configured to electronically control the operation of one or more components of the system 100, such as the vacuum pump 148; the valves 150, 152, 154; and/or the heating elements 160. In general, the controller 164 may correspond to any suitable processor-based device, including one or more computing devices. As shown in FIG. 12, for example, the controller 164 may include one or more processors 166 and one or more associated memory devices 168 configured to perform a variety of computer-implemented functions (e.g., performing the methods, steps, calculations, and the like disclosed herein). As used herein, the term "processor" refers not only to integrated circuits referred to in the art as being included in a computer, but also refers to a controller, microcontroller, a microcomputer, a programmable logic controller (PLC), an application specific integrated circuit (ASIC), a Field Programmable Gate Array (FPGA), and other programmable circuits. Additionally, the memory devices 168 may generally include memory element(s) including, but not limited to, a computer readable medium (e.g., random access memory (RAM)), a computer readable nonvolatile medium (e.g., flash memory), a compact disc-read only memory (CD-ROM), a magneto-optical disk (MOD), a digital versatile disc (DVD), and/or other suitable memory elements or combinations thereof. The memory device 168 may store instructions that, when executed by the processor 166, cause the processor 166 to perform various functions, such as one or more aspects of the method 200 described below with reference to FIG. 19. In addition, the controller 164 may also include various other suitable components, such as a communications circuit or module, one or more input/output channels, a data/control bus and/or the like.

The operation of the system 100 will be described below in the context of forming one of the blade segments 28. Nevertheless, as mentioned above, the system 100 may be configured to form any other suitable thermoplastic component.

In several embodiments, the controller 164 may be configured to heat the mold 122, and, more particularly, the mold segments 124, to a forming temperature suitable for forming a thermoplastic sheet 170 (FIG. 13) into the blade segment 28. More specifically, the controller 164 may be communicatively coupled to the heating elements 160. As such, the controller 164 may be configured to transmit control signals (e.g., as indicated by dashed arrows 172 in FIG. 12) to the heating elements 160 instructing the heating elements 160 to heat the mold 122 to the forming temperature. For example, the forming temperature may be greater than the glass transition temperature of the thermoplastic sheet 170. In one embodiment, the controller 164 may be configured to control each heating element 160 independently of each other. In a further embodiment, the controller 164 may be configured to control the heating elements 160 coupled to each mold segment 124 independently of the heating elements 160 coupled to each of the other mold segments 124.

As used herein, "glass transition temperature" refers to the temperature at which an amorphous polymer or an amorphous portion of a crystalline polymer transitions from a hard and brittle glassy state to a rubbery state. For example, the glass transition temperature (T_{g}) may be determined by dynamic mechanical analysis (DMA) in accordance with ASTM E1240-09. A Q800 instrument from TA Instruments may be used. The experimental runs may be executed in tension/tension geometry, in a temperature sweep mode in the range from -120° C to 150° C with a heating rate of 3° C/min. The strain amplitude frequency may be kept constant (2 Hz) during the test. Three (3) independent samples may be tested to get an average glass transition temperature, which is defined by the peak value of the tan δ curve, wherein tan δ is defined as the ratio of the loss modulus to the storage modulus (tan δ = E"/E').

As illustrating in FIG. 13, the mold 122 may be configured to receive the thermoplastic sheet 170 for forming an outer skin 78 (FIG. 14) of the blade segment 28. More specifically, the thermoplastic sheet 170 is placed on the first surfaces 126 of the mold segments 124 such that at least a portion of the thermoplastic sheet 170 is position in or over the mold cavity 134. In this respect, a portion of the thermoplastic sheet 170 is positioned over the first portion 130 of the top surface 126 of each of the mold segments 124. As mentioned above, certain embodiments of the system 100 include one or more alignment features 136. In such embodiments, the thermoplastic sheet 170 may aligned with the alignment features 136. For example, as shown in FIG. 13, the thermoplastic sheet 170 may be abutted with the alignment feature 136.

Referring now to FIGS. 10, 12, and 14, the controller 164 may be configured to apply the vacuum to each vacuum chamber 138, 140, 142 after the thermoplastic sheet 170 is positioned on the mold 122. More specifically, the controller 164 is communicatively coupled to the vacuum pump 148 and the valves 150, 152, 154. As such, the controller 164 may be configured to transmit the control signals 172 to the vacuum pump 148 instructing the vacuum pump 148 to create or generate the vacuum within the vacuum system 146. The controller 164 may also be configured to the transmit the control signals 172 to the valves 150, 152, 154 instructing the valves 150, 152, 154 to open to apply the vacuum to the corresponding vacuum chamber 138, 140, 142. When the vacuum is applied to each vacuum chamber 138, 140, 142, the vacuum pump 148 draws air (e.g., as indicated by arrows 174 in FIGS. 10 and 13) out of the mold cavity 134, through the vacuum passages 144, and into the vacuum chambers 138, 140, 142. The air 174 then flows out of the vacuum chambers 138, 140, 142and through the various conduits 156 and the vacuum pump 148 before exiting the system 100. The vacuum in the mold cavity 134 causes a thermoplastic sheet 170 to conform shape of the mold cavity 134 (i.e., conform to first portion 130 of the first surfaces 126 of the mold segments 124), thereby forming the outer skin 78 of the blade segment 28.

As mentioned above, the controller 164 may be configured to control the valves 150, 152, 154 such that the vacuum is applied to the vacuum chambers 138, 140, 142 independently of the other vacuum chambers 138, 140, 142. More specifically, the controller 164 may be configured to control the valves 150, 152, 154 such that the vacuum is applied to the vacuum chambers 138, 140, 142 sequentially to prevent formation of wrinkles in the thermoplastic sheet 170. For example, in one embodiment, controller 164 may be configured to apply the vacuum to the vacuum chamber 138, then to the vacuum chamber 140, and finally to the vacuum chamber 142. In this respect, the portion of the thermoplastic sheet 170 conforms to the portion of the mold cavity 134 defined by the mold segment 124 associated with the vacuum chamber 138, then conforms to the portion of the mold cavity 134 defined by the mold segment 124 associated with the vacuum chamber 140, and finally conforms to the portion of the mold cavity 134 defined by the mold segment 124 associated with the vacuum chamber 142. As such, the thermoplastic sheet 170 is pulled along the span-wise direction 102 from the root side 104 toward the tip side 106, thereby preventing wrinkles therein.

In another embodiment, controller 164 may be configured to apply the vacuum to the vacuum chamber 142, then to the vacuum chamber 140, and finally to the vacuum chamber 140. That is, the vacuum is initially applied to the vacuum chamber 138, 140, 142 corresponding to the mold segment 124 having the alignment feature 136. In this respect, the portion of the thermoplastic sheet 170 conforms to the portion of the mold cavity 134 defined by the mold segment 124 associated with the vacuum chamber 142, then conforms to the portion of the mold cavity 134 defined by the mold segment 124 associated with the vacuum chamber 140, and finally conforms to the portion of the mold cavity 134 defined by the mold segment 124 associated with the vacuum chamber 138. As such, the thermoplastic sheet 170 is secured against the alignment feature 136 before being pulled along the span-wise direction 102 to prevent formation wrinkles therein.

In a further embodiment, the controller 164 may be configured to apply the vacuum non-sequentially, such as to the vacuum chamber 140 before simultaneously applying the vacuum to the vacuum chambers 138, 142. In this respect, the portion of the thermoplastic sheet 170 conforms to the portion of the mold cavity 134 defined by the mold segment 124 associated with the vacuum chamber 140 before simultaneously conforming to the portions of the mold cavity 134 defined by the mold segments 124 associated with the vacuum chambers 138, 142. As such, the thermoplastic sheet 170 is secured to the mold 122 at a central location thereof and then pulled outward away from this central location along the span-wise direction 102 to prevent wrinkle formation therein. Nevertheless, in alternative embodiments, the controller 164 may be configured to apply the vacuum to the vacuum chambers 138, 140, 142 in any other suitable manner.

As mentioned above, in one embodiment, the system 100 includes the pressure sensors 158. As shown in FIG. 12, the pressure sensors 158 may be communicatively coupled to the controller 164. As such, the controller 164 may be configured to receive measurement signals (e.g., as indicated by dashed arrows 176 in FIG. 12) indicative of the pressure within the corresponding vacuum chamber 138, 140, 142. The controller 164 may then be configured to determine the pressure within one or more the vacuum chambers 138, 140, 142 based on the received measurement signals 176. In an alternative embodiment, the pressure sensors 158 may not be communicatively coupled to the controller 164. For example, in such embodiments, the pressure sensors 158 may include a display indicating the measured pressure.

Referring back to FIG. 14, in certain instances, the outer skin 78 of the blade segment 28 may need trimming after formation. In such instances, the controller 164 may be configured to control a cutting tool 178 (e.g., a computer numeric control (CNC) water jet cutting device) to remove an excess portion 180 of the outer skin 78. Nevertheless, the thermoplastic sheet 170 may be trimmed to the desired size of the outer skin 78 before placement on the mold 122 such that the outer skin 78 does not include the excess portion 180.

In certain embodiments, the blade segment 28 formed by the system 100 only include the outer skin 78. In such embodiments, the controller 164 may be configured to send the control signals 172 to the heating elements 160 instructing the heating elements 160 to terminate operation after formation and/or trimming of the outer skin 78. Once the outer skin 78 cools to a temperature below the glass transition temperature thereof, the outer skin 78 may be removed from the mold 122. In one embodiment, coolant may be circulated through the fluid passage 162 to decrease the cooling time.

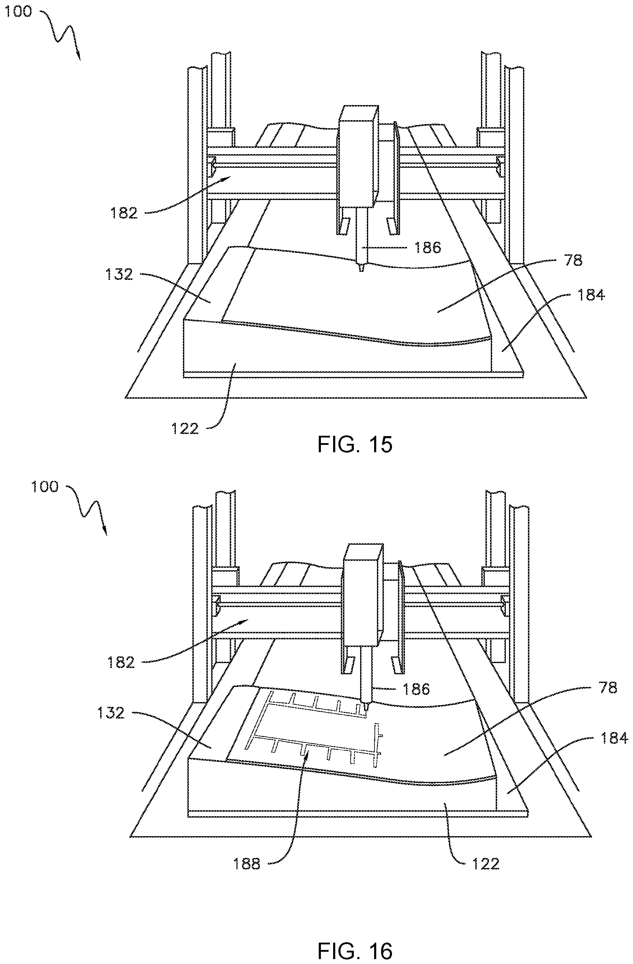

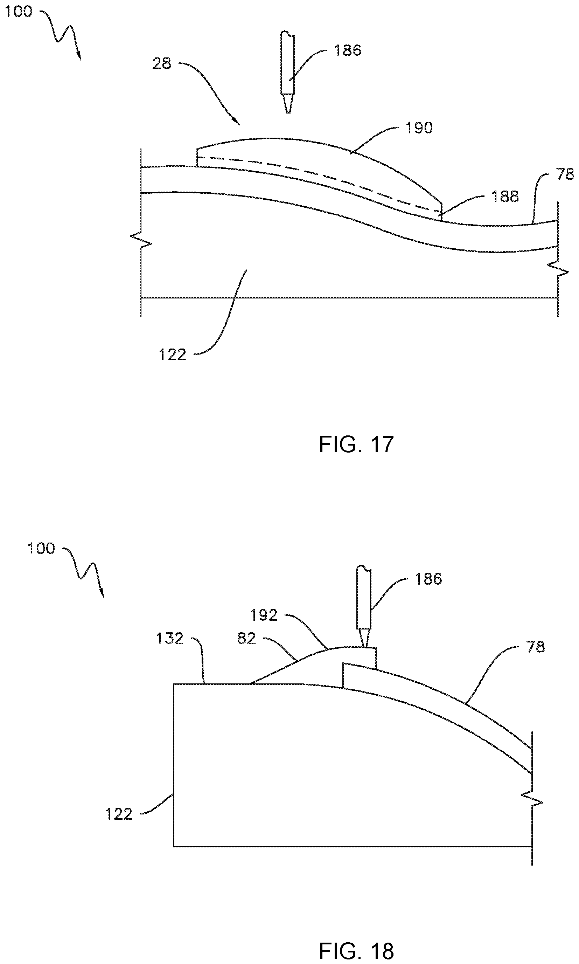

In other embodiments, however, the blade segment 28 may include a structural component 80 (FIG. 17), such as one of the spar caps 34, 36, 38, 40, or an extension 82 (FIG. 19), such as a trailing edge extension or serration, coupled to the outer skin 78. In such embodiments, the mold 122 may be positioned relative to a CNC three-dimensional printing device 182 ("CNC device 182"). For example, as shown in FIG. 15, the mold 122 may be placed onto or into a bed 184 of the CNC device 182. Alternatively, the mold 122 may be positioned under the CNC device 182 or adjacent to the CNC device 182. In particular embodiments, the CNC device 182 may be configured to include a tooling path that follows the contour of the outer skin 78.

After positioning the mold 122 relative to the CNC device 182, the CNC device 182 may be configured to form the structural member 80 on the outer skin 78 of the blade segment 28. More specifically, the controller 164 of the system 100 may be configured to control the heating elements 160 (e.g., via the control signals 172) to maintain the mold 122 and the outer skin 78 at or proximate to the formation temperature. While the mold 122 and the outer skin 78 are at or proximate to the formation temperature, a print head 186 (e.g., an extruder) of the CNC device 182 may be configured to print or otherwise deposit a first number of layers 188 of the structural member 80 as illustrated in FIG. 16. Printing the first number of layer 188 on the outer skin 78 while the outer skin 78 is at or proximate to the formation temperature facilitates thermal bonding between the first layer of the structural member 80 and the outer skin 78. In exemplary embodiments, the first number of layers 188 may be three layers. Although, in alternative embodiments, the first number of layers 188 may more or fewer layers. After the first number of layers 188 is printed, the controller 164 may be configured to instruct (e.g., via the control signals 172) the heating elements 160 to terminate operation or reduce heating.

After printing or depositing the first number of layers 188 of the structural member 80, the print head 186 of the CNC device 182 may print or otherwise deposit a second number of layers 190 of the structural member 80 onto the first number of layers 188. As illustrated in FIG. 17, the first and second numbers of layer 188, 190 generally form the entire structural member 80, such as the entire vertical thickness of the structural member 80. In several embodiments, the second number of layers 190 is printed after the operation of the heating elements 160 has been terminated. As such, the temperature of the outer skin 78 may drop below the glass transition temperature thereof while the second number of layers 190 is being printed. In this respect, the blade segment 28 may be removed from the mold 122 upon completion of printing the second number of layers 190.

Referring now to FIG. 18, the print head 186 of the CNC device 182 may be configured to form the extension 82 of the blade segment 28. More specifically, as shown, the print head 186 is configured to print or otherwise deposit a plurality of layers 192 onto the outer skin 78 and the second portion 182 of the top surface 126 of each mold segment 124. That is, the print head 186 prints a portion of the extension 80 is directly onto the mold 122. In one embodiment, the extension 82 may be a trailing edge extension, such as a serration.

In certain embodiments, the mold assembly 100 may be incorporated into or otherwise combined with other types of mold assemblies or mold assembly portions. For example, the mold assembly 100 may be used to form portions of the rotor blade 22 positioned proximate to its tip, while another mold assembly having a different configuration (e.g., one that does not require machining its mold cavity) may be used to form the portions of the rotor blade 22 proximate to its mid-span. Nevertheless, the mold assembly 100 may be used alone to form a component.

FIG. 19 illustrates one embodiment of a method 200 for forming a rotor blade segment for a wind turbine in accordance with aspects of the present subject matter. Although FIG. 19 depicts steps performed in a particular order for purposes of illustration and discussion, the methods discussed herein are not limited to any particular order or arrangement. As such, the various steps of the methods disclosed herein can be omitted, rearranged, combined, and/or adapted in various ways without deviating from the scope of the present disclosure.

As shown in FIG. 19, at (202), the method 200 includes removably coupling a plurality of mold segments together to form a mold of a rotor blade segment. For example, as described above, the plurality of mold segments 124 may be removably coupled together to form the mold 122. In certain embodiments, the mold 122 may be configured to form one of the blade segments 28 of the rotor blade 22 for the wind turbine 10.

At (204), the method 200 includes heating each of the plurality of mold segments to a forming temperature. For example, as described above, the controller 164 may send the control signals 172 to the heating elements 160 instructing the heating elements 160 to heat the mold 122 to a forming temperature, such as temperature above the glass transition temperature of the thermoplastic sheet 170.

Furthermore, at (206), the method 200 includes positioning a thermoplastic sheet on the mold such that at least a portion of the thermoplastic sheet is positioned within the mold cavity. For example, as described above, the thermoplastic sheet 170 may be placed on the mold 122 such that at least a portion of the thermoplastic sheet 170 is positioned within or over the mold cavity 134.

Additionally, at (208), the method 200 includes applying a vacuum to each vacuum chamber. For example, as described above, the controller 164 may be configured to transmit control signals 172 to particular valves 150, 152, 154 instructing those valves 150, 152, 154 to open such that the vacuum is applied to the corresponding vacuum chamber 138, 140, 142.

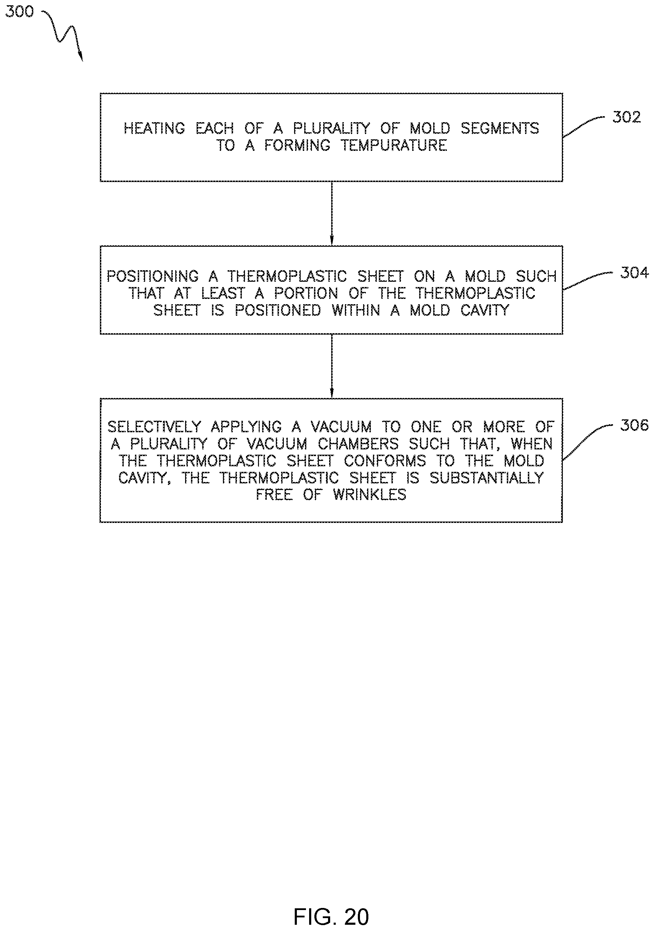

FIG. 20 illustrates one embodiment of a method 300 for vacuum forming a component using a vacuum forming mold assembly in accordance with aspects of the present subject matter. Although FIG. 20 depicts steps performed in a particular order for purposes of illustration and discussion, the methods discussed herein are not limited to any particular order or arrangement. As such, the various steps of the methods disclosed herein can be omitted, rearranged, combined, and/or adapted in various ways without deviating from the scope of the present disclosure.

As shown in FIG. 19, at (302), the method 300 includes heating each of the plurality of mold segments to a forming temperature. For example, as described above, the controller 164 may send the control signals 172 to the heating elements 160 instructing the heating elements 160 to heat the mold 122 to a forming temperature, such as temperature above the glass transition temperature of the thermoplastic sheet 170.

At (304), the method 300 includes positioning a thermoplastic sheet on the mold such that at least a portion of the thermoplastic sheet is positioned within the mold cavity. For example, as described above, the thermoplastic sheet 170 may be placed on the mold 122 such that at least a portion of the thermoplastic sheet 170 is positioned within or over the mold cavity 134.

Additionally, at (306), the method 300 includes selectively applying a vacuum to one or more of the plurality of vacuum chambers such that, when the thermoplastic sheet conforms to the mold cavity, the thermoplastic sheet is substantially free of wrinkles. For example, as described above, the controller 164 may be configured to transmit control signals 172 to particular valves 150, 152, 154 instructing those valves 150, 152, 154 to selectively open such that the vacuum is applied to the corresponding vacuum chambers 138, 140, 142 in a manner in which the thermoplastic sheet 170 is free or substantially free from wrinkles. This may include applying the vacuum sequentially to the vacuum chambers 138, 140, 142 or applying the vacuum non-sequentially to the vacuum chambers 138, 140, 142. As used herein, a wrinkle is a molding defect that results in a crease in a thermoplastic sheet being formed against a mold or a disturbance in the continuous contact of the thermoplastic sheet against a mold surface during the forming process. Wrinkles may also be referred to as webs or webbing defects.

This written description uses examples to disclose the technology, including the best mode, and also to enable any person skilled in the art to practice the technology, including making and using any devices or systems and performing any incorporated methods. The patentable scope of the technology is defined by the claims.

## Claims

1. A system (100) for vacuum forming a rotor blade segment (28) of a wind turbine (10), the system (100) comprising:
a plurality of mold segments (124) removably coupled together to define a mold cavity (134) configured for forming the rotor blade segment (28), the plurality of the mold segments (124) defining a plurality of vacuum chambers (138, 140, 142) of the system (100), wherein each of the plurality of mold segments defines a vacuum chamber of the plurality of vacuum chambers, at least one of the vacuum chambers (138, 140, 142) being fluidly isolated from the other vacuum chambers (138, 140, 142), one or more of the plurality of mold segments (124) further defining a plurality of vacuum passages (144) fluidly coupling the mold cavity (134) and the corresponding vacuum chamber (138, 140, 142).

2. The system (100) of claim 1, further comprising:
one or more valves (150, 152, 154) configured to selectively apply a vacuum created by one or more vacuum pumps (148) to each vacuum chamber (138, 140, 142); and,
a controller (164) communicatively coupled to the one or more valves (150, 152, 154), the controller (164) being configured to control the one or more valves (150, 152, 154) such that the vacuum is applied to one or more of the vacuum chambers (138, 140, 142) independently of each other vacuum chamber (138, 140, 142).

3. The system (100) of claims 1-2, wherein one or more of the plurality of mold segments (124) extend vertically between a bottom surface (128) and a top surface (126), the bottom surface (128) partially defining the corresponding vacuum cavity (138, 140, 142), the top surface (126) including a first portion (130) partially defining the mold cavity (134) and a second portion (132) positioned outside of the mold cavity (134).

4. The system (100) of claim 3, wherein the second portion (132) of the top surface (126) of one or more of the plurality of mold segments (124) is fluidly isolated from the corresponding vacuum chamber (138, 140, 142).

5. The system (100) of any of the preceding claims, wherein one or more of the plurality of mold segments (124) comprise one or more alignment features (136) configured to position a thermoplastic sheet (170) for forming the one or more rotor blade segments (28) within the mold cavity (134), the thermoplastic sheet (170) comprising at least a thermoplastic resin.

6. The system (100) of any of the preceding claims, further comprising:
one or more pressure sensors (158), each pressure sensor (158) being in operative association with one of the vacuum chambers (138, 140, 142), each pressure sensor (158) being configured to detect a parameter associated with the pressure in the corresponding vacuum chamber (138, 140, 142).

7. The system (100) of any of the preceding claims, wherein one or more of the plurality of mold segments (124) comprises a heating element (160) configured to selectively heat the corresponding one or more mold segments (124).

8. The system (100) of any of the preceding claims, wherein one or more of the plurality of mold segments (124) defines one or more fluid passages (162).

9. A method (200) for forming a rotor blade segment (28) for a wind turbine (10), the method (200) comprising:
removably coupling (202) a plurality of mold segments (124) together to form a mold (122) of the rotor blade panel (28), one or more of the plurality of mold segments (124) defining a portion of a mold cavity (134) of the mold (122), the mold cavity (134) being configured to form an outer skin (78) of the rotor blade panel (28), the plurality of mold segments (124) at least partially defining a plurality of vacuum chambers (138, 140, 142) of the mold, one or more of the plurality of vacuum chambers (138, 140, 142) being fluidly isolated from each other vacuum chamber (138, 140, 142), one or more of the plurality of mold segments (124) further defining a plurality of vacuum passages (144) fluidly coupling the mold cavity (134) and the corresponding vacuum chamber (138, 140, 142);
heating (204) each of the plurality of mold segments (124) to a forming temperature;
positioning (206) a thermoplastic sheet (170) on the mold (122) such that at least a portion of the thermoplastic sheet (170) is positioned within or over the mold cavity (134), the thermoplastic sheet (170) comprising at least a thermoplastic resin; and,
selectively (208) applying a vacuum to one or more of the plurality of vacuum chambers (138, 140, 142) such that the thermoplastic sheet (170) conforms to the mold cavity (134) to form the outer skin (78) of the rotor blade segment (28).

10. The method (200) of claim 9, further comprising:
aligning the thermoplastic sheet (170) with one or more alignment features (136) when positioning a thermoplastic sheet (170) on the mold (122).

11. The method (200) of claim 10, further comprising:
trimming the outer skin (78) of the rotor blade segment (28).

12. The method (200) of claims 9-11, wherein selectively applying the vacuum to each vacuum chamber (138, 140, 142) comprises selectively applying the vacuum to each vacuum chamber (138, 140, 142) in a sequential manner.

13. The method (200) of claims 9-12, wherein applying the vacuum to each vacuum chamber (138, 140, 142) comprises selectively applying the vacuum to each vacuum chamber (138, 140, 142) in a non-sequential manner.

14. The method (200) of claims 9-13, further comprising:
placing the mold (122) relative to a computer numeric control (CNC) device (182);
maintaining the outer skin (78) of the rotor blade segment (28) at the forming temperature after forming the outer skin (78); and,
printing, with the CNC device (182), a first number of layers (188) of a structural member (80) on the outer skin (78) when the outer skin (78) of the rotor blade segment (28) is at or above a glass transition temperature.

## Patentansprüche

1. System (100) zum Vakuumformen eines Rotorblattsegments (28) einer Windkraftanlage (10), wobei das System (100) Folgendes umfasst:
eine Vielzahl von Formwerkzeugsegmenten (124), die lösbar aneinander gekoppelt sind, um eine Formwerkzeughöhlung (134) zu definieren, die dazu konfiguriert ist, das Rotorblattsegment (28) zu formen, wobei die Vielzahl der Formwerkzeugsegmente (124) eine Vielzahl von Vakuumkammern (138, 140, 142) des Systems (100) definiert, wobei jedes der Vielzahl von Formwerkzeugsegmenten eine Vakuumkammer der Vielzahl von Vakuumkammern definiert, wobei mindestens eine der Vakuumkammern (138, 140, 142) von den anderen Vakuumkammern (138, 140, 142) fluidisch getrennt ist, wobei eines oder mehrere der Vielzahl von Formwerkzeugsegmenten (124) ferner eine Vielzahl von Vakuumkanälen (144) definieren, die die Formwerkzeughöhlung (134) und die entsprechende Vakuumkammer (138, 140, 142) fluidisch koppeln.

2. System (100) nach Anspruch 1, ferner umfassend:
ein oder mehrere Ventile (150, 152, 154), die dazu konfiguriert sind, einen durch eine oder mehrere Vakuumpumpen (148) erzeugten Unterdruck selektiv an jede Vakuumkammer (138, 140, 142) anzulegen; und
eine Steuereinheit (164), die kommunikativ an das eine oder die mehreren Ventile (150, 152, 154) gekoppelt ist, wobei die Steuereinheit (164) dazu konfiguriert ist, das eine oder die mehreren Ventile (150, 152, 154) derart zu steuern, dass der Unterdruck an eine oder mehrere der Vakuumkammern (138, 140, 142) unabhängig von jeder anderen Vakuumkammer (138, 140, 142) angelegt wird.

3. System (100) nach Ansprüchen 1-2, wobei sich eines oder mehrere der Vielzahl von Formwerkzeugsegmenten (124) vertikal zwischen einer unteren Oberfläche (128) und einer oberen Oberfläche (126) erstrecken, wobei die untere Oberfläche (128) die entsprechende Vakuumhöhlung (138, 140, 142) teilweise definiert, wobei die obere Oberfläche (126) einen die Formwerkzeughöhlung (134) teilweise definierenden ersten Abschnitt (130) und einen außerhalb der Formwerkzeughöhlung (134) positionierten zweiten Abschnitt (132) umfasst.

4. System (100) nach Anspruch 3, wobei der zweite Abschnitt (132) der oberen Oberfläche (126) eines oder mehrerer der Vielzahl von Formwerkzeugsegmenten (124) von der entsprechenden Vakuumkammer (138, 140, 142) fluidisch getrennt ist.

5. System (100) nach einem der vorangehenden Ansprüche, wobei eines oder mehrere der Vielzahl von Formwerkzeugsegmenten (124) ein oder mehrere Ausrichtmerkmale (136) umfassen, die dazu konfiguriert sind, eine thermoplastisches flächiges Element (170) zum Formen des einen oder der mehreren Rotorblattsegmente (28) in der Formwerkzeughöhlung (134) zu positionieren, wobei das thermoplastische flächige Element (170) mindestens ein thermoplastisches Harz umfasst.

6. System (100) nach einem der vorangehenden Ansprüche, ferner umfassend:
einen oder mehrere Drucksensoren (158), wobei die Drucksensoren (158) jeweils mit einer der Vakuumkammern (138, 140, 142) in Wirkverbindung stehen, wobei die Drucksensoren (158) jeweils dazu konfiguriert sind, einen mit dem Druck in der entsprechenden Vakuumkammer (138, 140, 142) assoziierten Parameter zu erfassen.

7. System (100) nach einem der vorangehenden Ansprüche, wobei eines oder mehrere der Vielzahl von Formwerkzeugsegmenten (124) ein Heizelement (160) umfassen, das dazu konfiguriert ist, das entsprechende eine oder die entsprechenden mehreren Formwerkzeugsegmente (124) selektiv zu erwärmen.

8. System (100) nach einem der vorangehenden Ansprüche, wobei eines oder mehrere der Vielzahl von Formwerkzeugsegmenten (124) einen oder mehrere Fluidkanäle (162) definieren.

9. Verfahren (200) zum Formen eines Rotorblattsegments (28) für eine Windkraftanlage (10), wobei das Verfahren (200) Folgendes umfasst:
lösbares Koppeln (202) einer Vielzahl von Formwerkzeugsegmenten (124) aneinander, um ein Formwerkzeug (122) des Rotorblattpaneels (28) zu bilden, wobei eines oder mehrere der Vielzahl von Formwerkzeugsegmenten (124) einen Abschnitt einer Formwerkzeughöhlung (134) des Formwerkzeugs (122) definieren, wobei die Formwerkzeughöhlung (134) dazu konfiguriert ist, eine Außenhaut (78) des Rotorblattpaneels (28) zu bilden, wobei die Vielzahl von Formwerkzeugsegmenten (124) eine Vielzahl von Vakuumkammern (138, 140, 142) des Formwerkzeugs mindestens teilweise definiert, wobei eine oder mehrere der Vielzahl von Vakuumkammern (138, 140, 142) von jeder anderen Vakuumkammer (138, 140, 142) fluidisch getrennt sind, wobei eines oder mehrere der Vielzahl von Formwerkzeugsegmenten (124) ferner eine Vielzahl von Vakuumkanälen (144) definieren, die die Formwerkzeughöhlung (134) und die entsprechende Vakuumkammer (138, 140, 142) fluidisch koppeln;
Erwärmen (204) jedes der Vielzahl von Formwerkzeugsegmenten (124) auf eine Formungstemperatur;
Positionieren (206) eines thermoplastischen flächigen Elements (170) auf dem Formwerkzeug (122), sodass mindestens ein Abschnitt des thermoplastischen flächigen Elements (170) in oder über der Formwerkzeughöhlung (134) positioniert ist, wobei das thermoplastische flächige Element (170) mindestens ein thermoplastisches Harz umfasst; und
selektives Anlegen (208) eines Unterdrucks an eine oder mehrere der Vielzahl von Vakuumkammern (138, 140, 142), sodass sich das thermoplastische flächige Element (170) an die Formwerkzeughöhlung (134) anpasst, um die Außenhaut (78) des Rotorblattsegments (28) zu bilden.

10. Verfahren (200) nach Anspruch 9, ferner umfassend:
Ausrichten des thermoplastischen flächigen Elements (170) auf ein oder mehrere Ausrichtmerkmale (136) beim Positionieren eines thermoplastischen flächigen Elements (170) auf dem Formwerkzeug (122).

11. Verfahren (200) nach Anspruch 10, ferner umfassend:
Zuschneiden der Außenhaut (78) des Rotorblattsegments (28).

12. Verfahren (200) nach Ansprüchen 9-11, wobei das selektive Anlegen des Unterdrucks an jede Vakuumkammer (138, 140, 142) das selektive Anlegen des Unterdrucks an jede Vakuumkammer (138, 140, 142) auf sequentielle Weise umfasst.

13. Verfahren (200) nach Ansprüchen 9-12, wobei das Anlegen des Unterdrucks an jede Vakuumkammer (138, 140, 142) das selektive Anlegen des Unterdrucks an jede Vakuumkammer (138, 140, 142) auf nicht sequentielle Weise umfasst.

14. Verfahren (200) nach Ansprüchen 9-13, ferner umfassend:
Platzieren des Formwerkzeugs (122) relativ zu einer CNC-Vorrichtung (182);
Halten der Außenhaut (78) des Rotorblattsegments (28) auf der Formungstemperatur nach dem Formen der Außenhaut (78); und
Drucken, mit der CNC-Vorrichtung (182), einer ersten Anzahl von Schichten (188) eines tragenden Teils (80) auf der Außenhaut (78), wenn sich die Außenhaut (78) des Rotorblattsegments (28) bei oder über einer Glasübergangstemperatur befindet.

## Revendications

1. Système (100) servant à des fins de formage sous vide d'un segment de pale de rotor (28) d'une éolienne (10), le système (100) comportant :
une pluralité de segments de moule (124) accouplés ensemble de manière amovible pour définir une cavité de moule (134) configurée à des fins de formage du segment de pale de rotor (28), la pluralité de segments de moule (124) définissant une pluralité de chambres à vide (138, 140, 142) du système (100), dans lequel chacun de la pluralité de segments de moule définit une chambre à vide de la pluralité de chambres à vide, au moins l'une des chambres à vide (138, 140, 142) étant isolée de manière fluidique par rapport aux autres chambres à vide (138, 140, 142), un ou plusieurs de la pluralité de segments de moule (124) définissant par ailleurs une pluralité de passages sous vide (144) accouplant de manière fluidique la cavité de moule (134) et la chambre à vide correspondante (138, 140, 142).

2. Système (100) selon la revendication 1, comportant par ailleurs :
une ou plusieurs soupapes (150, 152, 154) configurées pour appliquer de manière sélective un vide créé par une ou plusieurs pompes à vide (148) au niveau de chaque chambre à vide (138, 140, 142) ; et,
un dispositif de commande (164) couplé en communication auxdites une ou plusieurs soupapes (150, 152, 154), le dispositif de commande (164) étant configuré pour commander lesdites une ou plusieurs soupapes (150, 152, 154) de telle sorte que le vide est appliqué au niveau de l'une ou de plusieurs des chambres à vide (138, 140, 142) indépendamment de chaque autre chambre à vide (138, 140, 142).

3. Système (100) selon les revendications 1 à 2, dans lequel un ou plusieurs de la pluralité de segments de moule (124) s'étendent à la verticale entre une surface inférieure (128) et une surface supérieure (126), la surface inférieure (128) définissant partiellement la cavité sous vide correspondante (138, 140, 142), la surface supérieure (126) comprenant une première partie (130) définissant partiellement la cavité de moule (134) et une deuxième partie (132) positionnée à l'extérieur de la cavité de moule (134).

4. Système (100) selon la revendication 3, dans lequel la deuxième partie (132) de la surface supérieure (126) d'un ou de plusieurs de la pluralité de segments de moule (124) est isolée de manière fluidique par rapport à la chambre à vide correspondante (138, 140, 142).

5. Système (100) selon l'une quelconque des revendications précédentes, dans lequel un ou plusieurs de la pluralité de segments de moule (124) comportent un ou plusieurs éléments d'alignement (136) configurés pour positionner une feuille thermoplastique (170) servant à des fins de formage d'un ou de plusieurs segments de pale de rotor (28) à l'intérieur de la cavité de moule (134), la feuille thermoplastique (170) comportant au moins une résine thermoplastique.

6. Système (100) selon l'une quelconque des revendications précédentes, comportant par ailleurs :
un ou plusieurs capteurs de pression (158), chaque capteur de pression (158) fonctionnant en association avec l'une des chambres à vide (138, 140, 142), chaque capteur de pression (158) étant configuré pour détecter un paramètre associé à la pression dans la chambre à vide correspondante (138, 140, 142).

7. Système (100) selon l'une quelconque des revendications précédentes, dans lequel un ou plusieurs de la pluralité de segments de moule (124) comportent un élément chauffant (160) configuré pour chauffer de manière sélective lesdits un ou plusieurs segments de moule correspondants (124).

8. Système (100) selon l'une quelconque des revendications précédentes, dans lequel un ou plusieurs de la pluralité de segments de moule (124) définissent un ou plusieurs passages de fluide (162).

9. Procédé (200) servant à des fins de formage d'un segment de pale de rotor (28) pour une éolienne (10), le procédé (200) comportant les étapes consistant à :
accoupler de manière amovible (202) une pluralité de segments de moule (124) ensemble pour former un moule (122) du panneau de pale de rotor (28), un ou plusieurs de la pluralité de segments de moule (124) définissant une partie d'une cavité de moule (134) du moule (122), la cavité de moule (134) étant configurée pour former un revêtement extérieur (78) du panneau de pale de rotor (28), la pluralité de segments de moule (124) définissant au moins partiellement une pluralité de chambres à vide (138, 140, 142) du moule, une ou plusieurs de la pluralité de chambres à vide (138, 140, 142) étant isolées de manière fluidique par rapport à chaque autre chambre à vide (138, 140, 142), un ou plusieurs de la pluralité de segments de moule (124) définissant par ailleurs une pluralité de passages sous vide (144) accouplant de manière fluidique la cavité de moule (134) et la chambre à vide correspondante (138, 140, 142) ;
chauffer (204) chacun de la pluralité de segments de moule (124) jusqu'à une température de formage ;
positionner (206) une feuille thermoplastique (170) sur le moule (122) de telle sorte qu'au moins une partie de la feuille thermoplastique (170) est positionnée à l'intérieur de, ou par-dessus, la cavité de moule (134), la feuille thermoplastique (170) comportant au moins une résine thermoplastique ; et
appliquer de manière sélective (208) un vide au niveau de l'une ou de plusieurs de la pluralité de chambres à vide (138, 140, 142) de telle sorte que la feuille thermoplastique (170) s'adapte à la forme de la cavité de moule (134) pour former le revêtement extérieur (78) du segment de pale de rotor (28).

10. Procédé (200) selon la revendication 9, comportant par ailleurs l'étape consistant à :
aligner la feuille thermoplastique (170) sur un ou plusieurs éléments d'alignement (136) lors du positionnement d'une feuille thermoplastique (170) sur le moule (122).

11. Procédé (200) selon la revendication 10, comportant par ailleurs l'étape consistant à :
ébarber le revêtement extérieur (78) du segment de pale de rotor (28).

12. Procédé (200) selon les revendications 9 à 11, dans lequel l'étape consistant à appliquer de manière sélective le vide au niveau de chaque chambre à vide (138, 140, 142) comporte l'étape consistant à appliquer de manière sélective le vide au niveau de chaque chambre à vide (138, 140, 142) de manière séquentielle.

13. Procédé (200) selon les revendications 9 à 12, dans lequel l'étape consistant à appliquer le vide au niveau de chaque chambre à vide (138, 140, 142) comporte l'étape consistant à appliquer de manière sélective le vide au niveau de chaque chambre à vide (138, 140, 142) de manière non séquentielle.

14. Procédé (200) selon les revendications 9 à 13, comportant par ailleurs les étapes consistant à :
placer le moule (122) par rapport à un dispositif à commande numérique par calculateur (CNC) (182) ;
maintenir le revêtement extérieur (78) du segment de pale de rotor (28) à la température de formage après le formage du revêtement extérieur (78) ; et,
imprimer, au moyen du dispositif CNC (182), un premier nombre de couches (188) d'un élément de structure (80) sur le revêtement extérieur (78) quand le revêtement extérieur (78) du segment de pale de rotor (28) est à ou au-dessus d'une température de transition vitreuse.
